# FASCICULE DE BREVET EUROPEEN

(11) **EP 2 827 315 B1**
(45) Date de publication et mention de la délivrance du brevet: **20.07.2016**
(21) Numéro de dépôt: 14171434.5
(22) Date de dépôt: 06.06.2014
(51) Int. Cl.: G08C 19/00, E06B 9/00, H04B 17/00

(54) **Procédé de communication dans un système comprenant une entité d'alimentation et de communication et un actionneur domotique**
Kommunikationsverfahren in einem System, das eine Stromversorgungs- und Kommunikationseinheit und ein Haussystem-Stellglied umfasst
Communication method in a system including a supply and communication entity and home-automation actuator

(30) Priorité: 06.06.2013 FR 1355244
(43) Date de publication de la demande: 21.01.2015
(73) Titulaire: Somfy SAS, 74300 Cluses (FR)
(72) Inventeur: Desbiolles, Claude, 74800 ETEAUX (FR)
(74) Mandataire: Novaimo

(56) Documents cités:
- US-B1- 8 000 656

## Description

### Domaine de l'invention

L'invention concerne le domaine des installations domotiques comprenant des actionneurs électriques pour l'entraînement d'un élément mobile dans un bâtiment, tels que des fermetures ou protections solaires.

Ces actionneurs, en fonctionnement normal sur le site, sont commandés par l'intermédiaire d'une interface radio et/ou d'une interface filaire.

En cours de mise au point, de production, d'assemblage du produit porteur en usine, d'identification et de diagnostic d'un actionneur sur site, il est nécessaire de dialoguer avec l'actionneur, pour transmettre et/ou recevoir des informations telles que date d'assemblage, couple, vitesse, numéro de série, etc.

Ce dialogue est effectué à l'aide d'une entité d'alimentation et de communication capable d'alimenter l'actionneur et de communiquer avec ce dernier.

Le document US 8,000,656 décrit l'utilisation d'une telle entité.

La communication doit être effectuée de manière à couvrir l'ensemble de la gamme et avec un surcoût minimum et un débit aussi élevé que possible.

### Etat de la technique

Des solutions pour réaliser une communication entre un actionneur et une entité d'alimentation et de communication sont connues, par exemple utilisant une interface filaire de type UART ou USB. Des interfaces et des composants dédiés doivent être utilisés pour la connexion, ce qui induit une augmentation du coût et de complexité des produits. De plus, pour la programmation de ces interfaces, le débit et le format de données doivent être connus à l'avance par l'actionneur et l'entité d'alimentation et de communication.

Une communication pourra être réalisée seulement entre un émetteur et un récepteur partageant les mêmes débits et formats de données. De ce fait une entité d'alimentation et de communication pourra communiquer uniquement avec un sous-ensemble de la gamme d'actionneurs.

Les paramètres d'une communication peuvent aussi varier avec les conditions de fonctionnement. Par exemple, une variation importante de température peut provoquer une variation des signaux échangés.

L'invention se propose de résoudre ces problèmes, et de permettre à une entité d'alimentation et de communication de communiquer avec différents actionneurs, ou avec un même actionneur ACT, dans des conditions variables.

### Résumé de l'invention

Selon l'invention, un procédé de communication d'un actionneur est défini par la revendication 1.

Différents modes de réalisation du procédé de communication d'un actionneur sont définis par les revendications dépendantes 2 à 7.

Selon l'invention, un procédé de communication d'une entité d'alimentation et de communication est défini par la revendication 8.

Différents modes de réalisation du procédé de communication d'une entité d'alimentation et de communication sont définis par les revendications dépendantes 9 à 14.

Selon l'invention, un actionneur est défini par la revendication 15.

Selon l'invention, une entité d'alimentation et de communication est définie par la revendication 16.

Selon l'invention, un système est défini par la revendication 17.

L'invention concerne aussi un support d'enregistrement lisible par un processeur sur lequel est enregistré un programme d'ordinateur comprenant des instructions pour l'exécution des étapes du procédé de communication d'un actionneur défini précédemment.

L'invention concerne aussi un support d'enregistrement lisible par un processeur sur lequel est enregistré un programme d'ordinateur comprenant des instructions pour l'exécution des étapes du procédé de communication d'une entité d'alimentation et de communication définie précédemment.

### Brève description des figures

La figure 1 représente un système SYS mettant en oeuvre l'invention.
Les figures 2a et 2b représentent, sous forme simplifiée, deux modes de réalisation d'un moteur faisant partie d'un actionneur conforme à l'invention.
Les figures 3, 3a et 3b représentent, sous forme d'ordinogramme, les principales étapes d'un procédé de communication conforme à l'invention, mis en oeuvre par une entité d'alimentation et de communication IMS.
Les figures 4, 4a et 4b représentent, sous forme d'ordinogramme, les principales étapes d'un procédé de communication conforme à l'invention, mis en oeuvre par un actionneur ACT.
La figure 5 représente une suite de séquences temporelles du signal de réponse utilisées pour la communication montante.
La figure 6 représente les principaux échanges entre une entité d'alimentation et de communication IMS et un actionneur ACT, dans un système SYS conforme à l'invention.
Les figures 7 à 11 représentent des trames ou des portions de trames de signaux de réponse.

### Description détaillée d'un mode de réalisation préféré

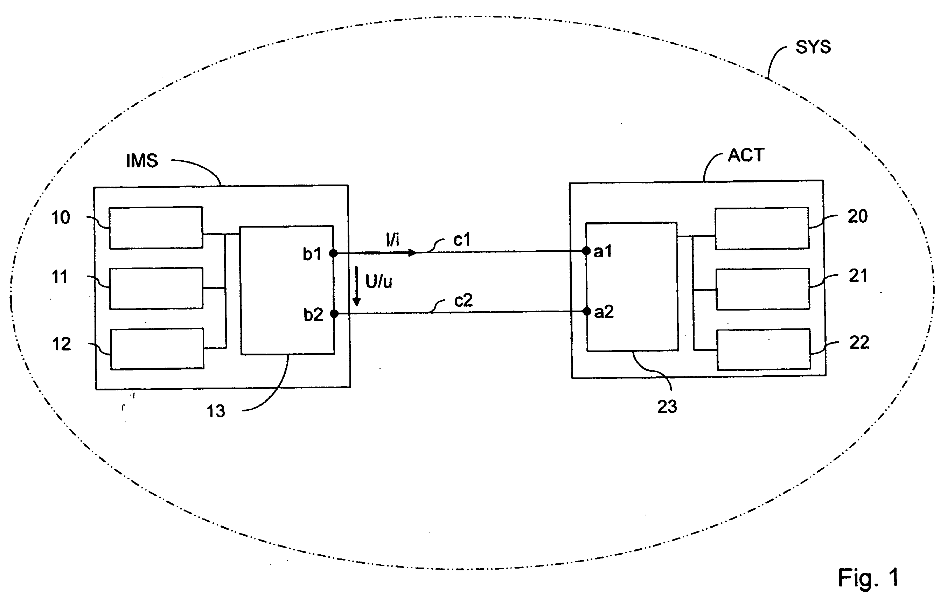

Sur la figure 1, on a représenté un système domotique comprenant une entité d'alimentation et de communication IMS comprenant un processeur 10, une mémoire vive de type RAM 11, une mémoire programme non volatile, éventuellement réinscriptible, de type ROM ou flash 12 et une interface ligne 13 permettant d'alimenter un actionneur ACT et de communiquer avec ce dernier par l'intermédiaire des deux bornes électriques b1, b2.

Sur la figure 1 est également représenté l'actionneur ACT comprenant un processeur 20, une mémoire vive de type RAM 21, une mémoire programme non volatile, éventuellement réinscriptible, de type ROM ou flash 22 et une interface ligne 23 pour recevoir la tension d'alimentation et communiquer avec l'entité d'alimentation et de communication IMS par l'intermédiaire des deux bornes électriques a1, a2. L'actionneur est de préférence un actionneur domotique. Il comprend un moteur électrique d'entraînement d'un élément mobile d'un bâtiment, comme un élément mobile de fermeture, d'occultation, de protection solaire ou d'écran.

Les interfaces lignes 13 et 23 sont connectées par deux fils c1, c2 aptes à connecter l'actionneur ACT à une alimentation électrique générée par l'entité d'alimentation et de communication IMS et à constituer un support physique de communication entre l'actionneur ACT et l'entité d'alimentation et de communication IMS.

L'entité d'alimentation et de communication IMS fournit, à l'actionneur ACT, un signal d'alimentation électrique, sous la forme d'un signal de tension U ou de courant électrique i.

Ce signal est généré par l'entité d'alimentation et de communication IMS entre ses bornes électriques b1, b2.

Les fils c1, c2 réalisent une connexion électrique entre les bornes électriques b1, b2, de l'entité d'alimentation et de communication IMS et les bornes électriques a1, a2 de l'actionneur ACT, permettant ainsi l'alimentation électrique de ce dernier.

Dans la suite de ce document le signal d'alimentation électrique, fourni par l'entité d'alimentation et de communication IMS à l'actionneur ACT, est nommé « signal d'alimentation ».

L'actionneur ACT constitue, vu de ses bornes a1, a2, une impédance de charge pour l'entité d'alimentation et de communication IMS.

Suite à la connexion des fils c1, c2, entre les bornes électriques a1, a2, de l'actionneur ACT et b1, b2, de l'entité d'alimentation et de communication IMS, un signal électrique s'établit en réponse : si l'alimentation électrique est fournie sous la forme d'un signal de tension U, ce signal est l'intensité du courant électrique I.

Alternativement, l'alimentation peut être fournie sous la forme d'un signal de courant électrique i ; dans ce cas, le signal établi en réponse est une tension électrique u.

Dans la suite de ce document, le signal qui s'établit suite à la génération du signal d'alimentation U, i, et à la connexion des fils c1, c2, entre les bornes électriques a1, a2, de l'actionneur ACT et b1, b2, de l'entité d'alimentation et de communication IMS, est nommé « signal de réponse ».

Ainsi, ces signaux d'alimentation et de réponse sont donc présents sur les fils c1, c2 et au niveau des bornes a1, a2 et b1, b2.

Le signal de réponse qui s'établit dépend d'une part du signal d'alimentation fourni par l'entité d'alimentation et de communication IMS et d'autre part de l'impédance de l'actionneur ACT. En effet, ce dernier, en provoquant une variation de son impédance Zact, crée une variation du signal de réponse et transmet ainsi une information à l'entité d'alimentation et de communication IMS.

La communication entre l'actionneur ACT et l'entité d'alimentation et de communication IMS se fait alors par l'envoi de données par l'actionneur ACT, sous forme d'une trame de données constituant au moins une partie du signal de réponse. La trame de données correspond préférentiellement à une suite d'éléments d'information, représentés par des variations du signal de réponse circulant sur les fils c1, c2.

L'entité d'alimentation et de communication IMS comprend des moyens de détection de courant, respectivement de tension. En utilisant des techniques connues par l'homme du métier, comme l'échantillonnage et la mémorisation, l'entité d'alimentation et de communication IMS peut déterminer les variations dans le temps du signal de réponse,. Un ensemble des variations temporelles du signal de réponse durant une période temporelle est appelé dans la suite de ce document « séquence temporelle du signal de réponse ». La durée de la période temporelle est déterminée selon un critère partagé par l'actionneur ACT et l'entité d'alimentation et de communication IMS. Un tel critère peut être une durée prédéterminée ou le passage du signal de réponse, lors de ses variations, par des valeurs seuils prédéfinies, et éventuellement par des valeurs extrêmes entre ces valeurs seuils prédéfinies. Les deux critères peuvent être combinés pour délimiter une même séquence, comme sera expliqué par la suite.

Une séquence temporelle du signal de réponse peut être représentée par un premier graphique temporel. On appelle « image » d'une séquence temporelle tout ensemble de variations temporelles du signal de réponse pouvant être représenté par un deuxième graphique temporel identique ou sensiblement identique au premier graphique temporel.

Les procédés de communication conformes à l'invention sont par exemple mis en oeuvre dans un système SYS représenté sur la figure 1.

Ce système SYS comprend une entité d'alimentation et de communication IMS, comprenant deux bornes électriques b1, b2, et au moins un actionneur ACT domotique comprenant un moteur électrique pour entraîner un élément mobile dans un bâtiment et deux bornes électriques a1, a2. Une connexion par l'intermédiaire des fils c1, c2, entre les bornes électriques de l'entité d'alimentation et de communication IMS, b1, b2 et celles de l'actionneur, a1, a2, permet l'alimentation de l'actionneur ACT par l'entité d'alimentation et de communication IMS et la communication entre l'actionneur ACT et l'entité d'alimentation et de communication IMS.

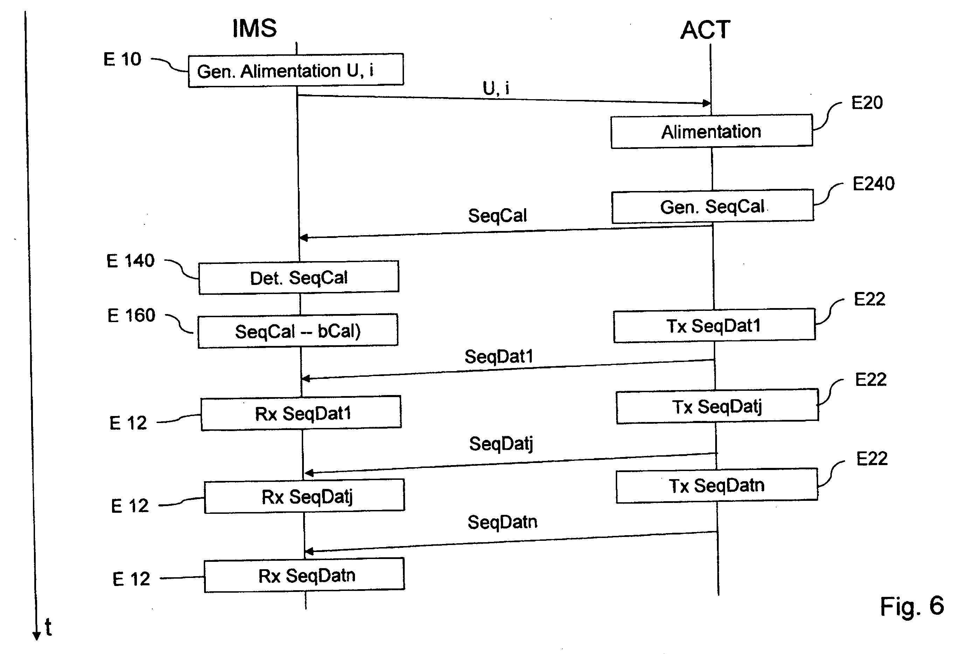

En référence à la figure 6, nous allons décrire les principales étapes d'un mode d'exécution d'un procédé de communication conforme à l'invention. De façon générale, ce procédé de communication du système SYS comporte les étapes suivantes :
- une étape E10, mise en oeuvre par l'entité d'alimentation et de communication IMS, de génération d'un signal d'alimentation en tension U, respectivement en courant i, entre les bornes électriques b1, b2;
- une étape E20, mise en oeuvre par l'actionneur ACT, d'analyse du signal d'alimentation U, respectivement i ;
- une étape E240, mise en oeuvre par l'actionneur ACT, de génération d'une première séquence temporelle d'un signal de réponse en courant I, respectivement en tension u, représentative d'un premier élément d'information de calibration prédéterminé bCal, dite première séquence de calibration SeqCal ;
- une étape E140, mise en oeuvre par l'entité d'alimentation et de communication IMS, de détermination de la première séquence de calibration SeqCal ;
- une étape E160, mise en oeuvre par l'entité d'alimentation et de communication IMS, d'attribution d'une signification de représentation de l'élément d'information de calibration prédéterminé bCal, à la première séquence de calibration SeqCal ;
- une étape E22, mise en oeuvre par l'actionneur ACT, d'émission d'une suite de séquences temporelles du signal de réponse I, respectivement u, représentative d'une suite d'éléments d'information, chaque élément d'information de cette suite, égal à l'élément d'information de calibration bCal, étant représenté par une séquence temporelle image de la première séquence de calibration SeqCal ;
- une étape E12, mise en oeuvre par l'entité d'alimentation et de communication IMS, de réception de la suite de séquences temporelles du signal de réponse I, respectivement u, représentative de la suite d'éléments d'information.

Selon les différents modes de réalisation, chaque élément d'information peut coder un élément binaire ou deux éléments binaires ou plus de deux éléments binaires.

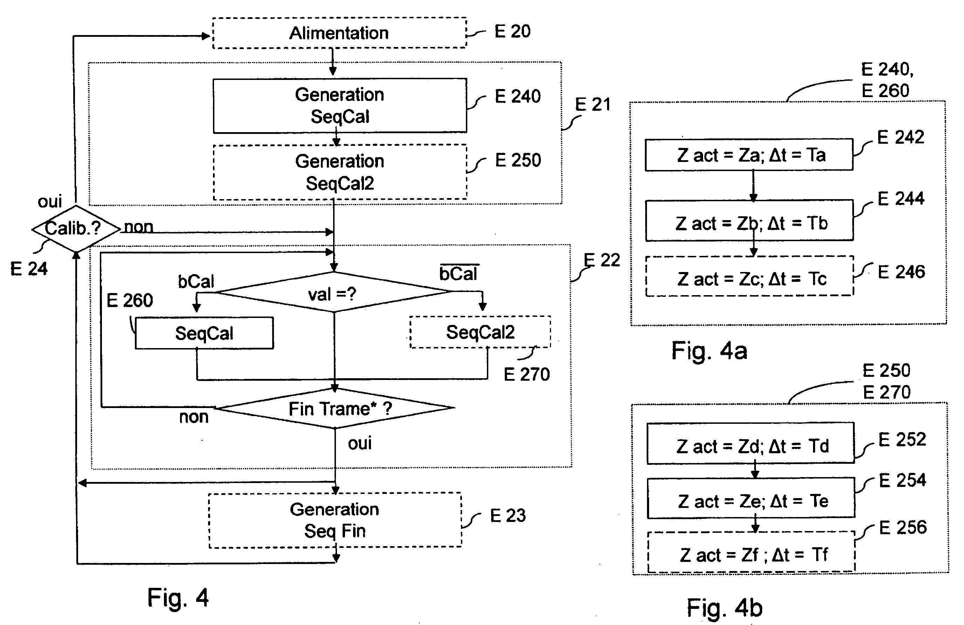

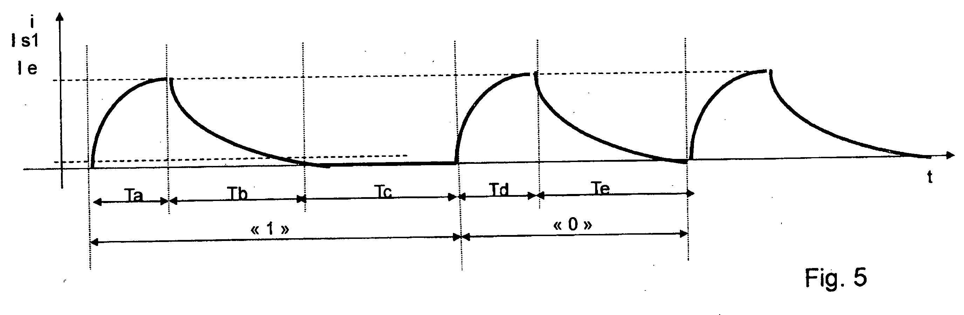

Un mode de réalisation du procédé de communication mis en oeuvre par un actionneur ACT est décrit en référence aux figures 4, 4a, 4b et 5. Dans ce mode de réalisation, les éléments d'information sont binaires et seront appelés de manière simplifiée « éléments binaires ».

L'actionneur ACT détermine, lors d'une étape E20 si un signal d'alimentation en tension U, respectivement en courant i, est fourni au niveau de ses bornes a1, a2.

Ensuite, l'actionneur ACT génère, lors d'une étape E240, une première séquence temporelle du signal de réponse, représentative d'un élément binaire de calibration bCal prédéterminé, dite première séquence de calibration SeqCal.

Le deuxième élément binaire, complémentaire à l'élément binaire de calibration bCal, peut être représenté par une deuxième séquence de calibration SeqCal2.

Cette deuxième séquence de calibration SeqCal2 peut être générée par l'actionneur ACT, lors d'une étape E250. Alternativement, la deuxième séquence de calibration SeqCal2 peut être déduite à partir de la première séquence de calibration SeqCal, par exemple par ajout ou suppression d'une partie prédéterminée de l'image de la première séquence de calibration SeqCal.

A noter que seulement la première séquence de calibration SeqCal doit être connue, l'élément binaire complémentaire pouvant être constitué par une séquence quelconque, pas nécessairement toujours la même, différente de la première séquence de calibration SeqCal. La séquence de calibration de l'élément binaire complémentaire peut également être déduite de la première séquence de calibration.

L'étape E240 de génération de la première séquence de calibration SeqCal, suivie éventuellement de l'étape optionnelle E250 de génération ou de déduction de la deuxième séquence de calibration SeqCal2, constitue(nt) une étape E21 de calibration.

Le rôle de cette étape E21 est de transmettre à l'entité d'alimentation et de communication IMS les informations concernant l'encodage des données qui seront transmises par la suite. De cette manière l'encodage peut changer à chaque nouvelle connexion et/ou à chaque modification de conditions de transmission.

L'étape E21 de calibration est suivie d'une étape E22 d'émission d'une trame de données, sous la forme d'une suite de séquences temporelles du signal de réponse I, respectivement u, représentative d'une suite d'éléments binaires constituant la trame de données à émettre.

L'actionneur ACT génère, pour chaque élément binaire de données égal à l'élément binaire de calibration bCal, une séquence temporelle du signal de réponse, image de la première séquence de calibration SeqCal.

Un élément binaire de données complémentaire au bit de calibration bCal peut être représenté par une séquence temporelle du signal de réponse image de la deuxième séquence de calibration SeqCal2.

L'actionneur ACT peut avoir une trame de données à émettre, par exemple :
- suite à une réception d'une trame préalablement émise par l'entité d'alimentation et de communication IMS, si cette trame demande un acquittement ou une information applicative de la part de l'actionneur ACT ;
- suite à un autotest (test de lui-même) effectué par l'actionneur ACT après sa mise sous tension, pour transmettre à l'entité d'alimentation et de communication IMS le résultat de l'autotest et des informations telles que la version matérielle et logicielle, numéro de lot, paramètres de fonctionnement ;
- suite à un événement détecté par l'actionneur, sans requête préalable de la part de l'entité d'alimentation et de communication IMS.

Dans un mode de réalisation, l'actionneur ACT et l'entité d'alimentation et de communication IMS utilisent des fils dédiés pour l'alimentation électrique, et des fils dédiés c1, c2, pour la communication. Dans ce cas, le générateur de tension, respectivement de courant, utilisé pour la communication peut fournir des signaux U, respectivement i, uniquement pour l'alimentation de l'interface de communication. Cette interface comprend les bornes b1, b2 de l'entité d'alimentation et de communication IMS, les bornes a1, a2 de l'actionneur ACT et les fils c1, c2.

Alternativement, l'actionneur ACT et l'entité d'alimentation et de communication IMS utilisent les mêmes fils c1, c2, pour réaliser différents modes de fonctionnement mutuellement exclusifs, tel un mode d'exécution de commande et un mode de communication descendante et/ou montante. Les mêmes fils c1, c2 sont utilisés pour alimenter l'actionneur ACT, quelque soit le mode de fonctionnement.

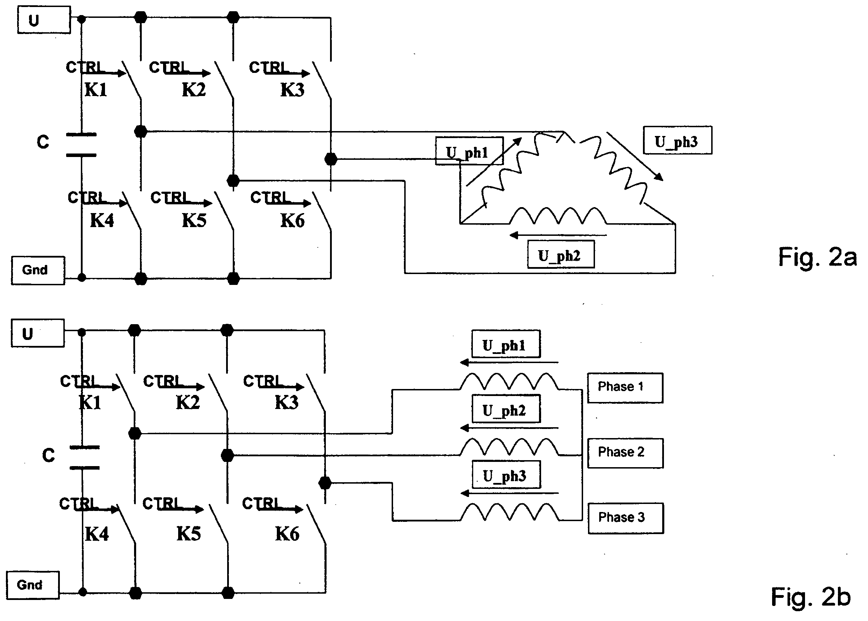

Pendant le mode d'exécution de commande, le fonctionnement du moteur est contrôlé par des composants électroniques comme illustré de manière schématique par les figures 2a et 2b.

Pendant le mode de communication montante, l'actionneur ACT utilise les composants électroniques, utilisés en mode exécution de commande pour le contrôle du moteur, de manière différente, c'est-à-dire pour configurer l'actionneur en tant qu'impédance de charge ayant des valeurs particulières.

En variant la configuration des composants électroniques, l'actionneur ACT peut varier l'impédance de charge Zact présentée à l'entité d'alimentation et de communication IMS ; de cette manière l'actionneur ACT peut générer des variations du signal de réponse en courant, respectivement en tension, à ses bornes a1, a2 et sur les fils c1, c2.

Quelque soit la configuration, fils c1, c2, dédiés pour la communication ou mêmes fils c1, c2, utilisés pour l'alimentation et la communication, l'actionneur réalise l'émission d'une trame sur ces fils c1, c2, en variant son impédance d'entrée.

De cette manière, pour un signal d'alimentation en tension U, l'actionneur ACT va provoquer une variation du signal de réponse en courant I, et pour un signal d'alimentation en courant i, une variation du signal de réponse en tension u.

L'invention peut être mise en oeuvre par un actionneur ACT utilisant des moteurs connus par l'homme du métier sous le nom de moteurs de type « sans balai » (ou « Brushless » en anglais), représenté schématiquement dans les figures 2a et 2b.

La commande de ces moteurs en fonctionnement normal est assurée par les commutateurs électroniques K1, K2, K3, K4, K5 et K6, réalisés par exemple en utilisant des transistors MOS ou des transistors bipolaires à grille isolée, sous le contrôle d'un module CTRL non représenté.

En mode de communication montante, le module de contrôle CTRL peut configurer les commutateurs K1, K2, K3, K4, K5 et K6 de manière différente ; dans ce cas l'impédance de charge présentée par le moteur de l'actionneur ACT varie en fonction de la configuration des commutateurs électroniques.

Dans l'exemple illustré, par la figure 5 l'actionneur ACT est alimenté en tension. Pour représenter un élément binaire donné, l'actionneur ACT génère une séquence temporelle du signal de réponse en courant I, respectivement en tension u, en variant la configuration des commutateurs Ki selon une séquence spécifique à chaque élément binaire ; il en résulte une séquence temporelle de courant spécifique à chaque élément binaire.

L'invention peut être mise en oeuvre par un actionneur ACT utilisant d'autre types de moteurs connus, tel qu'un moteur asynchrone, synchrone, universel (DC), pas à pas ou piézoélectrique.

Les valeurs des impédances peuvent varier d'un produit à l'autre ou, pour un même produit, avec les conditions de fonctionnement. Pour le même signal d'alimentation en tension U, respectivement en courant i, les séquences temporelles du signal de réponse en courant, respectivement en tension, peuvent donc être différentes.

Dans l'exemple illustré par les figures 4, 4a et 4b et 5, l'étape E240 de génération de la première séquence de calibration SeqCal, représentative de l'élément binaire de calibration prédéfini bCal, valant par exemple « 1 », comprend une sous-étape E242 de maintien d'une première configuration des commutateurs, assurant une impédance Za pendant une première durée Ta. Cette configuration permet la variation du signal de réponse en courant I, respectivement en tension u, jusqu'à une valeur extrême, minimale ou maximale, Ie, uₑ.

Ensuite une sous-étape E244 de maintien d'une deuxième configuration des commutateurs, assurant une impédance Zb pendant une deuxième durée Tb, est exécutée. Dans le cas d'une alimentation en tension U, cette deuxième configuration permet la recharge d'éléments capacitifs C de l'actionneur ACT, entraînant une décroissance du signal de réponse en courant I.

Une troisième sous-étape E246 de maintien d'une troisième configuration des commutateurs, assure une impédance Zc pendant une troisième durée Tc. Dans le cas d'une alimentation en tension, cette configuration peut correspondre à un maintien d'un signal de réponse en courant I quasi-nul sur les fils c1, c2.

De la même manière, l'élément binaire complémentaire, valant par exemple « 0 », peut être représenté par une séquence de deux configurations des commutateurs assurant respectivement les impédances Zd, Ze pendant des durées Td, Te.

Les valeurs Zd, Td peuvent être égales à Za, Ta, et les valeurs Ze, Te peuvent être égales à Zb, Tb. La séquence temporelle constituant le bit de valeur « 0 » peut différer de la séquence temporelle constituant le bit de valeur « 1 » uniquement en ce qu'elle ne comprend pas de sous-étape de maintien d'une configuration des commutateurs, assurant l'impédance Zc pendant la durée Tc. En particulier, cette dernière configuration peut ne pas exister, autrement dit Tc=0. Une telle réalisation est illustrée par la figure 5.

D'autres modes de réalisation peuvent être mis en oeuvre
- en ajoutant aux séquences représentatives des deux éléments binaires des durées Ti, Tj des configurations d'impédance Zi, respectivement Zj ; ou
- en supprimant des séquences, par exemple la sous-étape optionnelle E246 pour les étapes E240, E260.

Les valeurs des temps Ta, Tb, Tc, Td, Te, Ti et Tj peuvent être prédéterminées. Alternativement, les configurations correspondantes assurant les impédances Za, ..., Zj sont maintenues tant que le signal de réponse en courant I, respectivement en tension u, sur les fils c1, c2 n'a pas atteint des valeurs prédéterminées Iₐ, ..., Iⱼ respectivement uₐ, ..., uⱼ.

Les deux méthodes peuvent être utilisées pour une même séquence : les durées Ta et Tb peuvent être déterminées en fonction du signal de réponse en courant I, respectivement en tension u ; la durée Tc peut être prédéterminée.

Par exemple, la durée Ta est la durée de variation du signal de réponse entre une première valeur seuil Is1, respectivement us1, prédéfinie et une valeur extrême Iₑ, respectivement uₑ ; Tb, est la durée de variation du signal de réponse entre la valeur extrême Iₑ, respectivement uₑ, et une deuxième valeur seuil Is2, us2 prédéfinie.

Dans le mode de réalisation représenté, l'actionneur ACT émet au cours d'une étape E22, les éléments binaires constituant la trame de données, en générant, suivant la valeur de l'élément binaire à émettre :
- la première séquence de calibration SeqCal, si l'élément binaire à émettre est égal au bit de calibration bCal, au cours d'une étape E260 ; ou
- la deuxième séquence de calibration SeqCal2, si l'élément binaire à émettre est complémentaire au bit de calibration bCal, au cours d'une étape E270.

Dans un mode de réalisation, l'actionneur peut émettre, lors d'une étape E23, après l'émission des données une quatrième séquence temporelle du signal de réponse indiquant la fin de la trame.

Comme déjà mentionné, une étape E21 de calibration est exécutée par l'actionneur ACT pour transmettre à l'entité d'alimentation et de communication IMS les informations concernant l'encodage des informations qui seront transmises par la suite.

Cette étape peut être exécutée plusieurs fois au cours d'une même connexion (ou un même mode de fonctionnement) si les conditions de transmission changent. Un tel changement, nécessitant une nouvelle calibration, peut être detecté par chaque élément du système SYS et signalé à l'élément distant, comme expliqué dans la suite de ce document.

Le procédé mis en oeuvre par l'actionneur ACT comprend une étape E24 de décision si une nouvelle étape E21 de calibration est à exécuter. Du point de vue de l'actionneur ACT deux situations peuvent se présenter : l'actionneur ACT détecte lui-même un changement significatif des conditions de fonctionnement, nécessitant une nouvelle calibration, ou l'entité d'alimentation et communication IMS émet une requête de calibration, et l'actionneur détecte cette requête.

Dans le premier cas, une nouvelle calibration peut être signalée par l'actionneur ACT à l'entité d'alimentation et de communication IMS au cours de l'étape E24, par la génération d'une troisième séquence temporelle prédéterminée du signal de réponse en courant IReqCal2, respectivement en tension, uReqCal.

Une nouvelle émission de la séquence de calibration SeqCal peut être initiée par l'actionneur ACT si le nombre d'erreurs de transmission détectées est trop important. Cette détection d'erreurs peut être effectuée grâce aux techniques connues, comme la répétition d'une trame par l'actionneur si cette trame n'est pas acquittée par l'entité d'alimentation et de communication dans un temps prédéterminé.

Dans le deuxième cas, l'actionneur ACT peut détecter, au cours de l'étape E24, une variation temporelle prédéterminée du signal d'alimentation, uReqCal, respectivement du courant iReqCal, générée par l'entité d'alimentation et de communication IMS. Suite à une telle détection, l'actionneur ACT peut générer à nouveau la première séquence de calibration SeqCal, suivie dans certains modes de réalisation par la génération de la deuxième séquence de calibration SeqCal2.

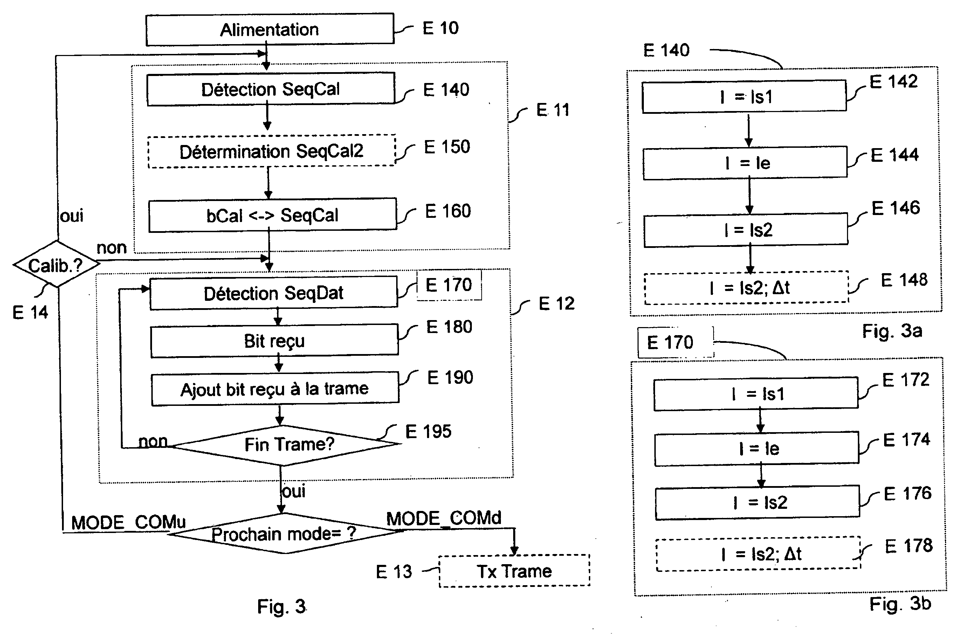

Un mode d'exécution du procédé mis en oeuvre par l'entité d'alimentation et de communication IMS est décrit maintenant en référence aux figures 3, 3a et 3b.

L'entité d'alimentation et de communication IMS détermine la première séquence de calibration SeqCal, au cours d'une étape E140 , c'est-à-dire que l'entité d'alimentation et de communication détermine ou identifie des caractéristiques électriques du signal de réponse, en particulier des caractéristiques électriques pendant une durée soit prédéterminée, soit déterminée en fonction du signal de réponse, comme expliqué ci-dessus.

Une signification de représentation d'un premier élément binaire de calibration bCal prédéterminé est attribuée à la première séquence de calibration (SeqCal) lors d'une étape E160 ; c'est-à-dire que l'entité d'alimentation et de communication attribue un sens à la première séquence de calibration, en particulier, elle peut attribuer la valeur « 1 » ou la valeur « 0 » à la première séquence de calibration SeqCal.

Ensuite, au cours d'une étape E12, l'entité d'alimentation et de communication IMS reçoit au moins une trame de données constituée par une suite d'éléments binaires. Chaque élément binaire est représenté par une séquence temporelle du signal de réponse en courant I, respectivement en tension u, dite séquence de données SeqDat. Ces séquences de données, détectées entre les bornes b1, b2, sont représentatives soit de l'élément binaire de calibration bCal, soit de l'élément binaire complémentaire. Chaque élément binaire de données égal à l'élément binaire de calibration bCal est représenté par une séquence temporelle du signal de réponse image de la première séquence de calibration SeqCal.

L'entité d'alimentation et de communication IMS, ayant des moyens de détermination des séquences temporelles du signal de réponse I, u, sur les fils c1, c2, peut déduire les éléments binaires transmis.

L'entité d'alimentation et de communication IMS, comprend des moyens d'échantillonnage et mémorisation du signal de réponse en courant I, respectivement en tension u, détecté entre ses bornes b1, b2, L'entité d'alimentation et de communication IMS peut déterminer ainsi l'image de la séquence temporelle du signal de réponse I, u.

L'entité d'alimentation et de communication IMS fournit l'alimentation électrique à l'actionneur ACT, au cours d'une étape E10. Cette alimentation peut provenir d'un générateur de tension continue, alternative ou d'un générateur de courant. L'alimentation électrique est générée par l'entité d'alimentation et de communication IMS entre ses bornes électriques b1, b2, connectées par l'intermédiaire des fils c1, c2, aux bornes électriques de l'actionneur ACT, a1, a2.
- Ensuite, l'entité d'alimentation et de communication IMS détermine, au cours d'une étape E140, une première séquence temporelle d'un signal de réponse I, respectivement u, dite première séquence de calibration SeqCal.
- Une signification de représentation d'un premier élément binaire prédéterminé, bCal, est attribuée, lors d'une étape E160, à la première séquence de calibration SeqCal.

Dans un mode de réalisation, l'étape E140 de détermination de la séquence de calibration SeqCal comprend les sous-étapes :
- E142 de détermination du début de la séquence, lorsque le signal de réponse en courant I, respectivement en tension u, sur les fils c1, c2, atteint une première valeur seuil prédéterminée, Is1, respectivement us1 ;
- E144 de détermination d'une valeur extrême, minimale ou maximale, du signal de réponse en courant Iₑ, respectivement en tension uₑ, sur les fils c1, c2 ; cette détermination utilise des techniques connues, tel que échantillonnage, mémorisation et traitement de signal ;
- E146 de détermination de la fin de la séquence lorsque le signal de réponse en courant I, respectivement en tension u générée sur les fils c1, c2 atteint une deuxième valeur seuil Is2, respectivement us2.

L'étape E140 peut comprendre une sous-étape optionnelle E148 de détection d'un signal de réponse en courant I, respectivement en tension u, ayant une valeur sensiblement égale à la deuxième valeur seuil Is2, respectivement us2 pendant une durée prédéterminée.

Le signal de réponse en courant I, respectivement en tension u, est ainsi échantillonné et mémorisé entre le début et la fin de la séquence SeqCal.

Le deuxième élément binaire, complémentaire à l'élément binaire de calibration bCal, peut être représenté par une deuxième séquence de calibration SeqCal2.

Cette deuxième séquence de calibration SeqCal2 peut être détectée par l'entité d'alimentation et de communication IMS lors d'une étape E150.

Alternativement, la deuxième séquence de calibration SeqCal2 peut être déduite à partir de la première séquence de calibration SeqCal, par exemple par ajout ou suppression d'une partie prédéterminée de l'image de la première séquence de calibration SeqCal.

A noter que seulement la première séquence de calibration SeqCal doit être connue, le deuxième élément binaire pouvant être constitué par une séquence quelconque, pas nécessairement toujours la même, différente de la première séquence de calibration SeqCal.

Ensuite, au cours d'une étape E12 l'entité d'alimentation et de communication IMS reçoit une suite de séquences temporelles du signal de réponse en courant I, respectivement en tension u, représentative d'une suite d'éléments binaires, chaque élément binaire égal à l'élément binaire de calibration bCal étant représenté par une séquence temporelle image de la première séquence de calibration SeqCal. L'entité d'alimentation et de communication déduit de cette suite de séquences temporelles une suite d'informations utiles.

Dans l'exemple illustré par les figures 3, 3a et 3b, l'étape E12 de réception comprend une sous-étape E170 de détection d'une séquence temporelle du signal de réponse en courant I, respectivement u, représentative d'un élément binaire bDat, dite séquence de donnée SeqDat.

Dans un mode de réalisation, l'étape E170 de détection de la séquence de données SeqDat comprend les sous-étapes :
- détection E172 d'une première valeur du signal de réponse en courant I, respectivement u, généré sur les fils c1, c2, sensiblement égale à la première valeur seuil Is1, us1 ;
- détection E174 d'une deuxième valeur du signal de réponse courant I, respectivement u, généré sur les fils c1, c2, sensiblement égale à la valeur extrême Iₑ, respectivement uₑ ;
- détection E176 d'une troisième valeur du signal de réponse en courant I, respectivement en tension u, généré sur les fils c1, c2, sensiblement égale à la deuxième valeur seuil Is2, us2.
L'étape E170 peut comprendre une sous-étape optionnelle E178 de détection d'un signal de réponse en courant I, respectivement en tension u, ayant une valeur sensiblement égale à la deuxième valeur seuil Is2, respectivement us2 pendant une durée prédéterminée.

Une fois la séquence SeqDat déterminée, l'entité d'alimentation et de communication peut déterminer, lors d'une sous-étape E180, la valeur de l'élément binaire bDat par comparaison de la séquence de données SeqDat avec au moins la première séquence de calibration SeqCal : une séquence de données, image de la première séquence de calibration SeqCal est interprétée par l'entité d'alimentation et de communication IMS comme un élément binaire de données égal à l'élément binaire de calibration bCal.
Si le mode de réalisation met en oeuvre une étape de détermination, par détection ou déduction, de la deuxième séquence de calibration SeqCal2, la séquence de données SeqDat peut être comparée, au cours de la sous-étape E180 avec les deux séquences de calibration, SeqCal, SeqCal2.

Dans un mode de réalisation, la fin d'une trame de données est déterminée lors d'une étape E195, par la détection d'une séquence temporelle du signal de réponse spécifique de fin de trame. Alternativement, la fin d'une trame peut être déterminée en comparant le nombre d'octets reçus avec le nombre d'octets attendus.

L'étape E140 de détection de la première séquence de calibration SeqCal, suivie éventuellement de l'étape optionnelle E150 de détection de la deuxième séquence de calibration SeqCal2, constitue(nt) une étape E11 de détection de calibration.

Le rôle de cette étape E11 est de permettre à l'entité d'alimentation et de communication IMS de déterminer les informations concernant l'encodage des données qui seront transmises par la suite. De cette manière l'encodage peut changer à chaque nouvelle connexion et/ou à chaque modification de conditions de transmission.

Une étape E11 de détection de calibration est exécutée au moins une fois, suite à la connexion entre l'entité d'alimentation et de communication IMS et l'actionneur ACT, mais elle peut être exécutée plusieurs fois durant une même connexion, par exemple si une variation de température est détectée, ou si le nombre d'erreurs de transmissions est trop élevé. Cette détection d'erreurs peut être effectuée grâce aux techniques connues, comme les CRC, les bits de parité, ou toute autre séquence destinée à vérifier l'intégrité de données reçues.

Un changement de conditions de fonctionnement, détecté par l'entité d'alimentation et de communication IMS peut être signalé à l'actionneur ACT au cours d'une étape E14 par la génération d'une variation temporelle prédéterminée du signal d'alimentation UReqCall, respectivement iReqCal1. Cette variation temporelle du signal d'alimentation constitue une requête de calibration émise par l'entité d'alimentation et de communication IMS.

Un changement de conditions de fonctionnement nécessitant une nouvelle calibration peut être signalé aussi par l'actionneur ACT ; dans ce cas, une troisième séquence temporelle du signal de réponse en courant, IReqCal2, respectivement en tension, uReqCal2, est générée par l'actionneur ACT.

L'entité d'alimentation et de communication IMS peut détecter, au cours de l'étape E14, cette troisième séquence temporelle prédéterminée du signal de réponse IReqCal2, respectivement de la tension uReqCal2.

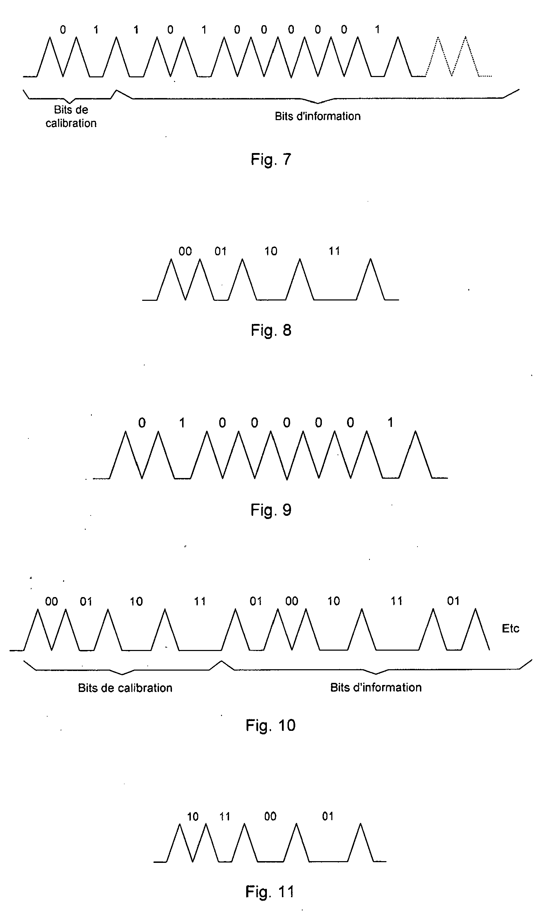

L'entité d'alimentation et de communication IMS peut donc, lors de l'étape E14, détecter ou générer une requête de calibration et déterminer ainsi que la prochaine étape à exécuter est une étape E140 de détermination de la séquence de calibration SeqCal.
Dans un autre mode de réalisation du procédé, les éléments d'information ne sont pas nécessairement binaires. Ils consistent plus généralement en des éléments d'information pouvant prendre plusieurs états ou valeurs et notamment plus de deux valeurs ou états.
Comme vu précédemment, la communication selon l'invention peut être réalisée sans ajout de composants dédiés dans l'actionneur. La génération du signal de réponse est réalisée en utilisant le moteur comme charge. Cependant, ce signal de réponse est amorti, notamment par des condensateurs de la carte électronique de commande du moteur.
La vitesse de communication va énormément dépendre de l'ensemble formé par la carte électronique de commande du moteur et le moteur.
Pour améliorer la vitesse de communication montante c'est-à-dire de l'actionneur vers l'entité d'alimentation et de communication, une possibilité serait d'ajouter des composants dédiés qui rendrait le protocole de communication indépendant de l'ensemble carte électronique - moteur. De plus ces composants étant électriquement placés dans l'étage d'entrée, il y aurait lieu de les protéger contre les perturbations électromagnétiques (foudre par exemple). Cette protection entrainerait l'ajout d'autres composants. L'ajout de tous ces composants supplémentaires engendrerait une augmentation de la longueur de l'actionneur. Pour des raisons de coût, cette possibilité n'est pas concevable sur des produits manufacturés à grands volumes.
Avantageusement, le débit de communication est adapté à l'actionneur de manière automatique ou adaptative. En fonction du contexte de l'actionneur (couple actionneur, dispersion de construction, température, etc ), la communication montante, c'est-à-dire de l'actionneur vers l'entité d'alimentation et de communication peut être plus être plus ou moins rapide. Pour établir la vitesse de communication montante, si les paramètres de communication sont fixés par construction, il doit être tenu compte de :
- la dispersion maximale au niveau de l'actionneur, celle-ci étant fonction notamment du moteur, des condensateurs de l'actionneur ; et
- la dérive maximale, celle-ci étant fonction notamment de la température par exemple.
On peut ensuite déterminer une procédure en prenant en compte ces dispersion et dérive maximales, pour définir un protocole compatible avec les conditions les moins favorables à la vitesse de communication.
Suite à la génération d'une impulsion ou d'une séquence temporelle du signal de réponse, l'actionneur surveille certains signaux internes (la tension du signal d'alimentation par exemple), ensuite l'actionneur détermine l'instant où le régime transitoire se termine. A cet instant, l'actionneur est en mesure d'émettre une nouvelle impulsion.
Cette logique fonctionne si l'actionneur émet des informations permettant de "calibrer" le temps entre deux impulsions.
Chaque trame émise est par exemple constituée :
- d'un élément de "calibration" (par exemple un "bit 0" suivi d'un "bit 1 "). On pourrait émettre un seul bit de calibration et en déduire l'autre ou les autres par une relation mathématique (par exemple, la durée du bit 1 vaut 1,5 fois la durée du bit 0. Par exemple encore, pour des séquences de calibration codant deux bits, on peut varier la durée de la deuxième séquence, par rapport à la première, comme dans l'exemple précédent, et obtenir les troisième et quatrième séquences en modifiant les amplitudes respectives de la première et deuxième séquence). Cependant, en émettant tous les bits de calibration, le protocole peut être rendu accessible à tous les types d'équipements futurs,
- d'un ou plusieurs éléments de données.
Par exemple, le débit peut être déterminé en début de chaque trame. Une trame peut avoir une structure comme représentée à la figure 7. Grâce aux deux bits de calibration, l'entité d'alimentation et de communication à l'écoute de l'actionneur s'étalonne et s'ajuste au débit fixé par l'actionneur. Cet ajustement a avantageusement lieu à chaque nouvelle trame.
Avantageusement, chaque élément de donnée ou chaque élément de calibration peut comporter plusieurs bits. Par exemple, chaque élément peut coder deux bits comme suit :
- la succession des bits 0 et 0 peut être traduite ou codée par un premier état de l'élément de donnée ;
- la succession des bits 0 et 1 peut être traduite ou codée par un deuxième état de l'élément de donnée ;
- la succession des bits 1 et 0 peut être traduite ou codée par un troisième état de l'élément de donnée ;
- la succession des bits 1 et 1 peut être traduite ou codée par un quatrième état de l'élément de donnée.
Une telle logique de codage des informations peut être illustrée par la trame représentée à la figure 8.
Chaque élément de donnée représente plusieurs bits. Dans l'exemple donné ci-dessus, un élément de donnée représente deux bits. Toutefois, le principe peut s'étendre avec un élément de données représentant n bits. Il s'ensuit bien évidemment une augmentation de vitesse de transmission ou du taux de transfert de données. Par exemple, pour coder et transmettre un "A" en code ASCII, il faut utiliser la chaîne binaire suivante 0100 0001.
Avec un codage dans lequel on utilise un élément de donnée ou une impulsion pour coder un bit, on peut obtenir une trame telle que représentée à la figure 9. Pour respecter le principe d'auto adaptation de l'entité d'alimentation et de communication à l'écoute, il est nécessaire d'envoyer préalablement aux données une succession des deux impulsions de calibration (cette succession des impulsions de calibration n'étant pas représentée sur cette figure).
Avec un codage dans lequel on utilise un élément de donnée ou une impulsion pour coder deux bits, on peut obtenir une trame telle que représentée à la figure 10. Cependant, pour respecter le principe d'auto adaptation de l'entité d'alimentation et de communication à l'écoute, il est nécessaire d'envoyer préalablement aux données une succession des quatre impulsions de calibration.
Il résulte que, si la quantité de données à envoyer est faible et si les éléments de calibration doivent être envoyés dans chaque début de trame, il est favorable de coder un seul bit avec un élément de donnée ou une impulsion. Par contre, si la quantité d'informations à envoyer est élevée (ou si les éléments de calibration ne devaient pas être envoyés systématiquement dans chaque début de trame), il est favorable de coder deux bits avec un élément de donnée ou une impulsion. Ainsi, cette possibilité de différents codages permet d'atteindre un avantage de vitesse de transmission des données.
Avantageusement, l'entité d'alimentation et de communication peut automatiquement déterminer la nature du codage utilisé par l'actionneur pour communiquer. En effet, tant que l'entité d'alimentation et de communication détecte des éléments ou impulsions non encore déjà reçus dans la trame qu'elle est en train de recevoir, elle interprète ces éléments ou impulsions comme des éléments de calibration.
Par exemple, avec les logiques de communication évoquées précédemment, lors de la détection d'une troisième impulsion de la trame, l'entité d'alimentation et de communication détecte :
- soit un élément de donnée déjà connu ; l'entité d'alimentation et de communication à l'écoute peut en déduire que l'actionneur code un seul bit avec un élément de donnée ou une impulsion ;
- soit un élément de donnée non encore connu ; l'entité d'alimentation et de communication à l'écoute peut en déduire que l'actionneur code deux bits ou plus avec un élément de donnée ou une impulsion.
Comme énoncé plus haut, le principe peut être étendu à n bits.
Avantageusement encore, dans les exemples cités, l'ordre d'émission des différents éléments de calibration permet de déterminer le protocole de communication utilisé par l'actionneur pour communiquer avec l'entité d'alimentation et de communication. Par exemple, dans le cas où l'on utilise une impulsion pour coder un bit : on peut indiquer l'utilisation de deux protocoles de communication différents :
- si l'actionneur utilise le premier protocole, il émet d'abord une impulsion de calibration codant le bit 0, puis une impulsion de calibration codant le bit 1 ;
- si l'actionneur utilise le deuxième protocole, il émet d'abord une impulsion de calibration codant le bit 1, puis une impulsion de calibration codant le bit 0.
Par exemple, dans le cas où l'on utilise une impulsion pour coder deux bits et où l'on a donc quatre impulsions de calibration différentes : on peut indiquer l'utilisation de 24 protocoles de communication différents en considérant les différents ordres possibles d'émission des quatre impulsions de calibration.
Ainsi, l'ensemble des séquences temporelles de l'étape ou de la phase de calibration définit le protocole utilisé et/ou les éléments d'information utilisés dans le signal ou dans la trame.
De préférence, lorsqu'on définit les éléments de calibration, on analyse au préalable la trame à émettre et on associe, aux impulsions de calibration les plus courtes, le bit ou les séries de bits les plus utilisés dans la trame. Par exemple, si la trame est composée de 25 fois le motif "10", 15 fois le motif "11 ", 12 fois le motif "00" et 4 fois le motif "01 ", on a intérêt à choisir le codage défini à la figure 11. Il s'ensuit un avantage de vitesse de transmission des données.
Au fil du temps, le protocole de communication peut se complexifier. L'entité d'alimentation et de communication à l'écoute de l'actionneur peut indiquer à l'actionneur qu'il ne comprend pas le protocole, par exemple en modifiant son alimentation, notamment par un passage de 120V à 80V ou 0V de la tension d'alimentation.
En effet, l'actionneur peut émettre, selon un protocole, une impulsion pour coder deux bits alors que l'entité d'alimentation et de communication ne connaît qu'un protocole dans lequel une impulsion code un bit. Dès que l'entité d'alimentation et de communication à l'écoute voit une séquence de calibration qu'il ne connaît pas, il avertit l'actionneur, notamment par une modification de la tension d'alimentation. Ainsi, l'actionneur peut en conséquence passer à un mode de communication défini par un autre protocole connu de l'entité d'alimentation et de communication, notamment un protocole de communication plus lent, par exemple utilisant une impulsion pour coder un bit.
Avantageusement, l'actionneur doit générer des impulsions avec un rapport signal/bruit aussi élevé que possible, le tout dans les plus brefs délais possibles. Néanmoins, il doit être tenu compte des limitations physiques de l'actionneur. En effet, un courant trop élevé peut détruire ou endommager l'actionneur, notamment endommager les interrupteurs électroniques ou démagnétiser le moteur. Pour ce faire, on débute l'impulsion en fixant une charge au niveau de l'actionneur correspondant à une intensité maximale (Imax) du courant alimentant l'actionneur, puis lorsque l'intensité limite est presqu'atteinte, la charge est modifiée de sorte à maintenir l'intensité à cette valeur limite. Dans le cas d'un actionneur avec des enroulements (dont la résistance vaut R_{Enroulemen}t) connectés en triangle, avec deux interrupteurs dans l'actionneur, la charge peut valoir 2/3×R_{Enroulement}. Avec trois interrupteurs dans l'actionneur, la charge peut valoir 1/2×R_{Enroulement}. En outre, pour maintenir l'intensité à cette valeur, on peut piloter des séries d'ouvertures et de fermetures des interrupteurs en PWM (modulation de largeur d'impulsion).

## Revendications

1. Procédé de communication d'un actionneur (ACT) domotique comprenant un moteur électrique d'entraînement d'un élément mobile dans un bâtiment et deux bornes électriques (a1, a2) permettant l'alimentation de l'actionneur (ACT) par une entité d'alimentation et de communication (IMS) et la communication entre l'actionneur (ACT) et l'entité d'alimentation et de communication (IMS), le procédé comprenant les étapes :
- analyse (E20) d'un signal d'alimentation (U, i) fourni par l'entité d'alimentation et de communication (IMS) ;
- génération (E240) d'une première séquence temporelle d'un signal de réponse (I, u), représentative d'un premier élément d'information de calibration (bCal) prédéterminé, dite première séquence de calibration (SeqCal) ;
- émission (E22) d'une suite de séquences temporelles du signal de réponse (I, u), représentative d'une suite d'éléments d'information, chaque élément d'information de cette suite, égal à l'élément d'information de calibration (bCal), étant représenté par une séquence temporelle image de la première séquence de calibration (SeqCal).

2. Procédé selon la revendication 1, **caractérisé en ce que** le nombre d'éléments binaires codés par chaque élément d'information est déterminé en fonction du volume et/ou du contenu des informations à transmettre, notamment en fonction du volume et/ou du contenu des informations à transmettre dans une trame ou un message.

3. Procédé selon l'une des revendications précédentes, **caractérisé en ce que** l'étape d'émission (E22) comprend la génération, pour chaque valeur de l'élément d'information, d'une séquence temporelle du signal de réponse correspondant, en particulier égale, à la séquence de calibration associée à cette valeur de l'élément d'information.

4. Procédé selon l'une des revendications précédentes, **caractérisé en ce que** l'ordre de génération de la première séquence temporelle du signal de réponse et de génération de l'au moins une deuxième séquence temporelle du signal de réponse est défini par le protocole de communication choisi par l'actionneur, parmi un ensemble d'au moins deux protocoles, notamment l'ordre de génération de la première séquence temporelle du signal de réponse et de génération de l'au moins une deuxième séquence temporelle du signal de réponse indique le mode de codage des éléments d'information dans le protocole choisi par l'actionneur.

5. Procédé selon l'une des revendications précédentes, **caractérisé en ce que** l'actionneur est apte à mettre en oeuvre plusieurs protocoles de communication et **en ce que** l'actionneur choisit un autre protocole de communication à utiliser en cas de réception d'une information de non-compatibilité émis par l'entité d'alimentation et de communication (IMS).

6. Procédé selon l'une des revendications précédentes, **caractérisé en ce que** l'étape (E240) de génération de la première séquence de calibration (SeqCal) comprend les sous-étapes :
- configuration (E242) de l'impédance (Zact) de l'actionneur à une première valeur (Za) pendant une première durée (Ta) ;
- configuration (E244) de l'impédance (Zact) de l'actionneur à une deuxième valeur (Zb) pendant une deuxième durée (Tb).

7. Procédé selon la revendication précédente, **caractérisé en ce que** l'étape (E240) de génération de la première séquence de calibration (SeqCal) comprend une sous-étape de configuration (E246) de l'impédance (Zact) dudit actionneur à une troisième valeur (Zc) pendant une troisième durée (Tc).

8. Procédé de communication d'une entité d'alimentation et de communication (IMS) comprenant deux bornes électriques (b1, b2) permettant
- d'alimenter un actionneur (ACT) domotique comprenant un moteur électrique d'entraînement d'un élément mobile dans un bâtiment et
- de communiquer avec cet actionneur (ACT),
le procédé comprenant les étapes :
- génération (E10) d'un signal d'alimentation (U, i) entre les bornes électriques (b1, b2) ;
- détermination (E140) d'une première séquence temporelle d'un signal de réponse (I, u), dite première séquence de calibration (SeqCal) ;
- attribution (E160) d'une signification de représentation d'un premier élément d'information de calibration (bCal) prédéterminé à la première séquence de calibration (SeqCal) ;
- réception (E12) d'une suite de séquences temporelles du signal de réponse (I, u), représentative d'une suite d'éléments d'information, chaque élément d'information de cette suite, égal à l'élément d'information de calibration (bCal), étant représenté par une séquence temporelle image de la première séquence de calibration (SeqCal).

9. Procédé selon la revendication précédente, **caractérisé en ce que** l'entité d'alimentation et de communication (IMS) attribue, préalablement à l'étape de réception (E12), à chaque séquence temporelle du signal de réponse non déjà reçue dans une trame, une signification de représentation d'au moins un deuxième élément d'information de calibration prédéterminé.

10. Procédé selon l'une des revendications 8 ou 9, **caractérisé en ce que** l'entité d'alimentation et de communication (IMS) déduit, de chaque séquence temporelle du signal de réponse de la trame qui a notamment été reçue et à laquelle il a déjà été attribuée une signification de représentation d'un élément d'information de calibration, une valeur d'élément d'information égale à la valeur de l'élément d'information de calibration précédemment attribuée à cette séquence temporelle du signal de réponse.

11. Procédé selon l'une des revendications 8 à 10, **caractérisé en ce que** l'entité d'alimentation et de communication (IMS) est apte à émettre une information de non-compatibilité en modifiant le signal d'alimentation (U,i), notamment en modifiant la tension du signal d'alimentation.

12. Procédé selon l'une des revendications 8 à 11, **caractérisé en ce que** l'étape (E140) de détermination de la première séquence de calibration (SeqCal) comprend les sous-étapes :
- détermination (E142) d'une première valeur seuil (Is1, us1) du signal de réponse (I, u) ;
- détermination (E144) d'une valeur extrême (Iₑ, uₑ) du signal de réponse (I, u) ;
- détermination (E146) d'une deuxième valeur seuil (Is2, us2) du signal de réponse (I, u).

13. Procédé de communication selon l'une des revendications 8 à 12, **caractérisé en ce que** l'étape de réception (E12) de la suite de séquences temporelles comprend les sous-étapes :
- détection (E170) d'une séquence temporelle du signal de réponse (I, u), représentative d'un élément d'information (bDat), dite séquence de donnée (SeqDat) ;
- détermination (E180) de la valeur de l'élément d'information (bDat) par comparaison de la séquence de données (SeqDat) avec au moins la première séquence de calibration (SeqCal).

14. Procédé de communication selon l'une des revendications 8 à 13, **caractérisé en ce que** l'étape (E170) de détection de la séquence de données (SeqDat) comprend les sous-étapes :
- détection (E172) d'une première valeur du signal de réponse (I, u) sensiblement égale à la première valeur seuil (Is1, us1) ;
- détection (E174) d'une deuxième valeur du signal de réponse (I, u) sensiblement égale à la valeur extrême (Ie, uₑ) ;
- détection (E176) d'une troisième valeur du signal de réponse (I, u) sensiblement égale à la deuxième valeur seuil (Is2, Us2).

15. Actionneur (ACT) domotique comprenant
- un moteur électrique d'entraînement d'un élément mobile dans un bâtiment ;
- deux bornes électriques (a1, a2) permettant l'alimentation de l'actionneur (ACT) par une entité d'alimentation et de communication (IMS) et la communication entre l'actionneur (ACT) et l'entité d'alimentation et de communication (IMS) ;
- des moyens (20, 21, 22, 23)
- d'analyse du signal d'alimentation (U, i) fourni par l'entité d'alimentation et de communication (IMS) ;
- de génération d'une première séquence temporelle d'un signal de réponse (I, u), représentative d'un élément d'information de calibration (bCal) prédéterminé, dite première séquence de calibration (SeqCal) ;
- d'émission d'une suite de séquences temporelles du signal de réponse (I, u), représentative d'une suite d'éléments d'information, chaque élément d'information de cette suite, égal à l'élément d'information de calibration (bCal), étant représenté par une séquence temporelle image de la première séquence de calibration (SeqCal).

16. Entité d'alimentation et de communication (IMS) comprenant
- deux bornes électriques (b1, b2) permettant d'alimenter un actionneur (ACT) domotique comprenant un moteur électrique d'entraînement d'un élément mobile dans un bâtiment et de communiquer avec cet actionneur (ACT) ;
- des moyens (10, 11, 12, 13)
- de génération d'un signal d'alimentation (U, i) entre les bornes électriques (b1, b2) ;
- de détermination d'une première séquence temporelle d'un signal de réponse (I, u), dite première séquence de calibration (SeqCal) ;
- d'attribution d'une signification de représentation d'un premier élément d'information de calibration (bCal) prédéterminé à la première séquence de calibration (SeqCal) ;
- de réception d'une suite de séquences temporelles du signal de réponse (I, u), représentative d'une suite d'éléments d'information, chaque élément d'information de cette suite, égal à l'élément d'information de calibration (bCal), étant représenté par une séquence temporelle image de la première séquence de calibration (SeqCal).

17. Système (SYS) comprenant au moins une entité d'alimentation et de communication (IMS) selon la revendication 16 et au moins un actionneur (ACT) selon la revendication 15.

## Patentansprüche

1. Kommunikationsverfahren eines Haustechnikaktuators (ACT), umfassend einen Elektromotor für den Antrieb eines mobilen Elements in einem Gebäude und zwei elektrische Klemmen (a1, a2), die die Versorgung des Aktuators (ACT) durch eine Versorgungs- und Kommunikationseinheit (IMS) und die Kommunikation zwischen dem Aktuator (ACT) und der Versorgungs- und Kommunikationseinheit (IMS) ermöglichen, wobei das Verfahren die folgenden Schritte umfasst:
- Analyse (E20) eines Versorgungssignals (U, i), das von der Versorgungs- und Kommunikationseinheit (IMS) geliefert wird;
- Erzeugung (E240) einer ersten Zeitsequenz eines Antwortsignals (I, u), die für ein erstes vorbestimmtes Kalibrierinformationselement (bCal) repräsentativ ist, erste Kalibriersequenz (SeqCal) genannt;
- Senden (E22) einer Folge von Zeitsequenzen des Antwortsignals (I, u), die für eine Folge von Informationselementen repräsentativ ist, wobei jedes Informationselement dieser Folge gleich dem Kalibrierinformationselement (bCal) durch eine Bildzeitsequenz der ersten Kalibriersequenz (SeqCal) dargestellt ist.

2. Verfahren nach Anspruch 1, **dadurch gekennzeichnet, dass** die Anzahl von durch jedes Informationselement codierten binären Elementen abhängig vom Volumen und/oder vom Inhalt der zu übertragenden Informationen bestimmt wird, insbesondere abhängig vom Volumen und/oder vom Inhalt der in einem Rahmen oder einer Mitteilung zu übertragenden Informationen.

3. Verfahren nach einem der vorhergehenden Ansprüche, **dadurch gekennzeichnet, dass** der Sendeschritt (E22) die Erzeugung, für jeden Wert des Informationselements, einer Zeitsequenz des Antwortsignals entsprechend, insbesondere gleich, der Kalibriersequenz enthält, die diesem Wert des Informationselements zugeordnet ist.

4. Verfahren nach einem der vorhergehenden Ansprüche, **dadurch gekennzeichnet, dass** der Befehl zur Erzeugung der ersten Zeitsequenz des Antwortsignals und zur Erzeugung der mindestens einen zweiten Zeitsequenz des Antwortsignals durch das vom Aktuator aus einer Einheit von mindestens zwei Protokollen ausgewählte Kommunikationsprotokoll definiert wird, insbesondere zeigt der Befehl zur Erzeugung der ersten Zeitsequenz des Antwortsignals und zur Erzeugung der mindestens einen zweiten Zeitsequenz des Antwortsignals den Codiermodus der Informationselemente in dem vom Aktuator gewählten Protokoll an.

5. Verfahren nach einem der vorhergehenden Ansprüche, **dadurch gekennzeichnet, dass** der Aktuator mehrere Kommunikationsprotokolle anwenden kann, und dass der Aktuator im Fall des Empfangs einer von der Versorgungs- und Kommunikationseinheit (IMS) gesendeten Nichtkompatibilitätsinformation ein anderes zu verwendendes Kommunikationsprotokoll auswählt.

6. Verfahren nach einem der vorhergehenden Ansprüche, **dadurch gekennzeichnet, dass** der Schritt (E240) der Erzeugung der ersten Kalibriersequenz (SeqCal) die folgenden Unterschritte umfasst:
- Konfiguration (E242) der Impedanz (Zact) des Aktuators auf einen ersten Wert (Za) während einer ersten Zeitdauer (Ta);
- Konfiguration (E244) der Impedanz (Zact) des Aktuators auf einen zweiten Wert (Zb) während einer zweiten Zeitdauer (Tb).

7. Verfahren nach dem vorhergehenden Anspruch, **dadurch gekennzeichnet, dass** der Schritt (E240) der Erzeugung der ersten Kalibriersequenz (SeqCal) einen Unterschritt der Konfiguration (E246) der Impedanz (Zact) des Aktuators auf einen dritten Wert (Zc) während einer dritten Zeitdauer (Tc) umfasst.

8. Kommunikationsverfahren einer Versorgungs- und Kommunikationseinheit (IMS), umfassend zwei elektrische Klemmen (b1, b2), die es ermöglichen,
- einen Haustechnikaktuator (ACT) zu versorgen, umfassend einen Elektromotor für den Antrieb eines mobilen Elements in einem Gebäude, und
- mit diesem Aktuator (ACT) zu kommunizieren, wobei das Verfahren die folgenden Schritte umfasst:
- Erzeugung (E10) eines Versorgungssignals (U, i) zwischen den elektrischen Klemmen (b1, b2);
- Bestimmung (E140) einer ersten Zeitsequenz eines Antwortsignals (I, u), erste Kalibriersequenz (SeqCal) genannt;
- Zuordnung (E160) einer Bedeutung einer Darstellung eines ersten vorbestimmten Kalibrierinformationselements (bCal) zu der ersten Kalibriersequenz (SeqCal);
- Empfangen (E12) einer Folge von Zeitsequenzen des Antwortsignals (I, u), die für eine Folge von Informationselementen repräsentativ ist, wobei jedes Informationselement dieser Folge gleich dem Kalibrierinformationselement (bCal) durch eine Bildzeitsequenz der ersten Kalibriersequenz (SeqCal) dargestellt ist.

9. Verfahren nach dem vorhergehenden Anspruch, **dadurch gekennzeichnet, dass** die Versorgungs- und Kommunikationseinheit (IMS) vor dem Empfangsschritt (E12) jeder nicht bereits in einem Rahmen empfangenen Zeitsequenz des Antwortsignals eine Darstellungsbedeutung mindestens eines zweiten vorbestimmten Kalibrierinformationselements zuweist.

10. Verfahren nach einem der Ansprüche 8 oder 9, **dadurch gekennzeichnet, dass** die Versorgungs- und Kommunikationseinheit (IMS) von jeder Zeitsequenz des Antwortsignals des Rahmens, die insbesondere empfangen wurde und der bereits eine Darstellungsbedeutung eines Kalibrierinformationselements zugewiesen wurde, einen Informationselementwert gleich dem Wert des Kalibrierinformationselements ableitet, das vorher dieser Zeitsequenz des Antwortsignals zugewiesen wurde.

11. Verfahren nach einem der Ansprüche 8 bis 10, **dadurch gekennzeichnet, dass** die Versorgungs- und Kommunikationseinheit (IMS) fähig ist, eine Nichtkompatibilitätsinformation zu senden, indem sie das Versorgungssignal (U, i) ändert, insbesondere, indem sie die Spannung des Versorgungssignals ändert.

12. Verfahren nach einem der Ansprüche 8 bis 11, **dadurch gekennzeichnet, dass** der Schritt (E140) der Bestimmung der ersten Kalibriersequenz (SeqCal) die folgenden Unterschritte umfasst:
- Bestimmung (E142) eines ersten Schwellenwerts (Is1, us1) des Antwortsignals (I, u);
- Bestimmung (E144) eines zweiten Extremwerts (Iₑ, uₑ) des Antwortsignals (I, u);
- Bestimmung (E146) eines zweiten Schwellenwerts (Is2, us2) des Antwortsignals (I, u).

13. Kommunikationsverfahren nach einem der Ansprüche 8 bis 12, **dadurch gekennzeichnet, dass** der Schritt des Empfangens (E12) der Folge von Zeitsequenzen die folgenden Unterschritte umfasst:
- Erfassung (E170) einer Zeitsequenz des Antwortsignals (I, u), die für ein Informationselement (bDat) repräsentativ ist, Datensequenz (SeqDat) genannt;
- Bestimmung (E180) des Werts des Informationselements (bDat) durch Vergleichen der Datensequenz (SeqDat) mit mindestens der ersten Kalibriersequenz (SeqCal).

14. Kommunikationsverfahren nach einem der Ansprüche 8 bis 13, **dadurch gekennzeichnet, dass** der Schritt (E170) der Erfassung der Datensequenz (SeqDat) die folgenden Unterschritte umfasst:
- Erfassung (E172) eines ersten Werts des Antwortsignals (I, u) im Wesentlichen gleich dem ersten Schwellenwert (Is1, us1) ;
- Erfassung (E174) eines zweiten Werts des Antwortsignals (I, u) im Wesentlichen gleich dem Extremwert (Iₑ, uₑ) ;
- Erfassung (E176) eines dritten Werts des Antwortsignals (I, u) im Wesentlichen gleich dem zweiten Schwellenwert (Is2, Us2).

15. Haustechnikaktuator (ACT), umfassend:
- einen Elektromotor für den Antrieb eines mobilen Elements in einem Gebäude;
- zwei elektrische Klemmen (a1, a2), die die Versorgung des Aktuators (ACT) durch eine Versorgungs- und Kommunikationseinheit (IMS) und die Kommunikation zwischen dem Aktuator (ACT) und der Versorgungs- und Kommunikationseinheit (IMS) ermöglichen,
- Mittel (20, 21, 22, 23)
- zur Analyse eines Versorgungssignals (U, i), das von der Versorgungs- und Kommunikationseinheit (IMS) geliefert wird;
- zur Erzeugung einer ersten Zeitsequenz eines Antwortsignals (I, u), die für ein vorbestimmtes Kalibrierinformationselement (bCal) repräsentativ ist, erste Kalibriersequenz (SeqCal) genannt;
- zum Senden einer Folge von Zeitsequenzen des Antwortsignals (I, u), die für eine Folge von Informationselementen repräsentativ ist, wobei jedes Informationselement dieser Folge gleich dem Kalibrierinformationselement (bCal) durch eine Bildzeitsequenz der ersten Kalibriersequenz (SeqCal) dargestellt ist.

16. Versorgungs- und Kommunikationseinheit (IMS) umfassend:
- zwei elektrische Klemmen (b1, b2), die es ermöglichen, einen Haustechnikaktuator (ACT) zu versorgen, umfassend einen Elektromotor für den Antrieb eines mobilen Elements in einem Gebäude, und mit diesem Aktuator (ACT) zu kommunizieren;
- Mittel (10, 11, 12, 13)
- zur Erzeugung eines Versorgungssignals (U, i) zwischen den elektrischen Klemmen (b1, b2);
- zur Bestimmung einer ersten Zeitsequenz eines Antwortsignals (I, u), erste Kalibriersequenz (SeqCal) genannt;
- zur Zuordnung einer Anzeige einer Darstellung eines ersten vorbestimmten Kalibrierinformationselements (bCal) zu der ersten Kalibriersequenz (SeqCal);
- zum Empfangen einer Folge von Zeitsequenzen des Antwortsignals (I, u), die für eine Folge von Informationselementen repräsentativ ist, wobei jedes Informationselement dieser Folge gleich dem Kalibrierinformationselement (bCal) durch eine Bildzeitsequenz der ersten Kalibriersequenz (SeqCal) dargestellt ist.

17. System (SYS), umfassend mindestens eine Versorgungs- und Kommunikationseinheit (IMS) nach Anspruch 16 und mindestens einen Aktuator (ACT) nach Anspruch 15.

## Claims

1. A communication method for a home automation actuator (ACT) comprising an electric motor driving a moving element in a building and two electric terminals (a1, a2) for powering the actuator (ACT) by a power supply and communication entity (IMS) and allowing the communication between the actuator (ACT) and the power supply and communication entity (IMS), the method comprising the following steps:
- analysis (E20) of a power supply signal (U, i) supplied by the power supply and communication entity (IMS);
- generation (E240) of a first time-sequence of a response signal (I, u), representative of a first predetermined calibration information element (bCal), called first calibration sequence (SeqCal);
- sending (E22) of a series of time-sequences of the response signal (I, u), representative of a series of information elements, each information element of this series, equal to the calibration information element (bCal), being represented by a time-sequence which is an image of the first calibration sequence (SeqCal).

2. The method as claimed in claim 1, in which the number of binary elements coded by each information element is determined according to the volume and/or the content of the information to be transmitted, notably according to the volume and/or the content of the information to be transmitted in a frame or a message.

3. The method as claimed in one of the preceding claims, in which the transmission step (E22) comprises the generation, for each value of the information element, of a time-sequence of the response signal corresponding to, in particular equal to, the calibration sequence associated with this value of the information element.

4. The method as claimed in one of the preceding claims, in which the command of generation of the first time-sequence of the response signal and of generation of the at least one second time-sequence of the response signal is defined by the communication protocol chosen by the actuator, from a set of at least two protocols, notably the command of generation of the first time-sequence of the response signal and of generation of the at least one second time-sequence of the response signal indicates the coding mode of the information elements in the protocol chosen by the actuator.

5. The method as claimed in one of the preceding claims, in which the actuator is capable of implementing a plurality of communication protocols and in which the actuator chooses another communication protocol to be used in the case of reception of a non-compatibility information item sent by the power supply and communication entity (IMS).

6. The method as claimed in one of the preceding claims, in which the step (E240) of generation of the first calibration sequence (SeqCal) comprises the following substeps:
- configuration (E242) of the impedance (Zact) of the actuator with a first value (Za) for a first duration (Ta);
- configuration (E244) of the impedance (Zact) of the actuator with a second value (Zb) for a second duration (Tb).

7. The method as claimed in claim 6, in which the step (E240) of generation of the first calibration sequence (SeqCal) comprises a substep of configuration (E246) of the impedance (Zact) of said actuator with a third value (Zc) for a third duration (Tc).

8. A communication method for a power supply and communication entity (IMS) comprising two electric terminals (b1, b2) making it possible
- to power a home automation actuator (ACT) comprising an electric motor driving a moving element in a building, and
- to communicate with this actuator (ACT),
the method comprising the following steps:
- generation (E10) of a power supply signal (U, i) between the electric terminals (b1, b2);
- determination (E140) of a first time-sequence of a response signal (I, u), called first calibration sequence (SeqCal);
- assignment (E160) of a meaning of representation of a first predetermined calibration information element (bCal) to the first calibration sequence (SeqCal);
- reception (E12) of a series of time-sequences of the response signal (I, u), representative of a series of information elements, each information element of this series, equal to the calibration information element (bCal), being represented by a time-sequence which is an image of the first calibration sequence (SeqCal).

9. The method as claimed in the preceding claim, in which the power supply and communication entity (IMS) assigns, prior to the reception step (E12), to each time-sequence of the response signal not already received in a frame, a meaning of representation of at least one second predetermined calibration information element.

10. The method as claimed in claim 8 or 9, in which the power supply and communication entity (IMS) deduces, from each time-sequence of the response signal of the frame which has notably been received and to which has already been assigned a meaning of representation of a calibration information element, an information element value equal to the value of the calibration information element previously assigned to this time-sequence of the response signal.

11. The method as claimed in one of claims 8 to 10, in which the power supply and communication entity (IMS) is capable of sending a non-compatibility information item by modifying the power supply signal (U,i), notably by modifying the voltage of the power supply signal.

12. The method as claimed in one of claims 8 to 11, in which the step (E140) of determination of the first calibration sequence (SeqCal) comprises the following substeps:
- determination (E142) of a first threshold value (Is1, us1) of the response signal (I, u);
- determination (E144) of an extreme value (Iₑ, uₑ) of the response signal (I, u);
- determination (E146) of a second threshold value (Is2, us2) of the response signal (I, u).

13. The communication method as claimed in one of claims 8 to 12, in which the step (E12) of reception of the series of time-sequences comprises the following substeps:
- detection (E170) of a time-sequence of the response signal (I, u), representative of an information element (bDat), called data sequence (SeqDat);
- determination (E180) of the value of the information element (bDat) by comparison of the data sequence (SeqDat) with at least the first calibration sequence (SeqCal).

14. The communication method as claimed in one of claims 8 to 13, in which the step (E170) of detection of the data sequence (SeqDat) comprises the following substeps:
- detection (E172) of a first value of the response signal (I, u) substantially equal to the first threshold value (Is1, us1);
- detection (E174) of a second value of the response signal (I, u) substantially equal to the extreme value (Iₑ, uₑ) ;
- detection (E176) of a third value of the response signal (I, u) substantially equal to the second threshold value (Is2, Us2).

15. A home automation actuator (ACT) comprising
- an electric motor driving a moving element in a building;
- two electric terminals (a1, a2) for powering the actuator (ACT) by a power supply and communication entity (IMS) and allowing the communication between the actuator (ACT) and the power supply and communication entity (IMS);
- means (20, 21, 22, 23)
- for analyzing the power supply signal (U, i) supplied by the power supply and communication entity (IMS);
- for generating a first time-sequence of a response signal (I, u), representative of a predetermined calibration information element (bCal), called first calibration sequence (SeqCal);
- for sending a series of time-sequences of the response signal (I, u), representative of a series of information elements, each information element of this series, equal to the calibration information element (bCal), being represented by a time-sequence which is an image of the first calibration sequence (SeqCal).

16. A power supply and communication entity (IMS) comprising
- two electric terminals (b1, b2) making it possible to power a home automation actuator (ACT) comprising an electric motor driving a moving element in a building and to communicate with this actuator (ACT);
- means (10, 11, 12, 13)
- for generating a power supply signal (U, i) between the electric terminals (b1, b2);
- for determining a first time-sequence of a response signal (I, u), called first calibration sequence (SeqCal);
- for assigning a meaning of representation of a first predetermined calibration information element (bCal) to the first calibration sequence (SeqCal);
- for receiving a series of time-sequences of the response signal (I, u), representative of a series of information elements, each information element of this series, equal to the calibration information element (bCal), being represented by a time-sequence which is an image of the first calibration sequence (SeqCal).

17. A system (SYS) comprising at least one power supply and communication entity (IMS) as claimed in claim 16 and at least one actuator (ACT) as claimed in claim 15.
